# EUROPEAN PATENT APPLICATION

(11) **EP 2 688 255 A1**
(43) Date of publication of application: **22.01.2014**
(21) Application number: 12760686.1
(22) Date of filing: 06.01.2012
(51) Int. Cl.: H04L 12/56

(54) **NETWORK SYSTEM, AND POLICY ROUTE CONFIGURATION METHOD**

(30) Priority: 18.03.2011 JP 2011060408
(71) Applicant: NEC Corporation, Tokyo 108-8001 (JP)
(72) Inventor: UENO Hiroshi, Tokyo 108-8001 (JP)
(74) Representative: Vossius & Partner
(86) International application number: PCT/JP2012/050132
(87) International publication number: WO 2012/127886

(57) **Abstract**

Any policy route control defined in a virtual network (VN) configuration is realized without packet transfer to the controller when a new flow occurs. Specifically, in VN, regarding the policy route control by which a redirect is performed between a virtual interface (VI) corresponding to a physical switch (PS) and VI defined only on a virtual node, the physical interface linked to the transfer destination of VI is specified to set a switch operation as the policy filter in PS. When redirect transfer is performed in VN based on a policy, it is determined whether the static setting or the dynamic setting triggered by a terminal detection is performed, based on the information regarding whether the VN policy is a rule corresponding to an actual PS port or not, and the transfer rule corresponding to the policy is preliminary set to the flow table determining the switch operation of PS.

## Description

### Technical Field

The present invention relates to a network system, and specifically relates to a policy route setting method in a virtual network.

### Background Art

In a large scale network environment for common use such as a data center, the virtualization of the network has been focused on. For changing a system configuration, the system is not constructed by changing the connections between the network devices. Instead, it is desired that, by managing the physical switches virtually, the virtual network can be flexibly constructed without changing the physical configuration.

As a related technique, in the patent literature 1 (JP2007-213465A), a control method of a computer, a program, and a virtual computer system are disclosed. In this related technique, in a computer, a plurality of logical sectors are constructed by a control program. The virtual interfaces (I/F) respectively set in the plurality of logical sectors share a physical interface. In a storage unit, management information which indicates the correspondence relation between the physical interface and a virtual interface is stored. A control unit performs the program. By this, the communication data destined to an external device received by the virtual interface is obtained, and by referring to the management information, the physical interface used for the communication destined to the external device is selected. When a trouble occurs in the communication route, the correspondence relation between the physical interface and the virtual interface is changed.

Further, in the patent literature 2 (JP2010-233126A), a route selection method, a route selection system, and a router used for the same are disclosed. In this route selection method, a route selection from a terminal in a domain to a terminal in another domain is performed, which forms an overlay network of a virtual network spanning over a plurality of domains. Specifically, in a router in each of the plurality of domains, the overlay network is formed by using the virtual nodes being formed respectively. In the overlay network, a tunnel connection from an edge router in a certain domain (a first router) to an edge router in another domain is performed. The second router measures the traffic status through the tunnel and reports it to the first router. In the first router, the route selection is performed by using: the measurement result; and the traffic status measured by an underlay network which is composed of the plurality of domains. The traffic status (the usage band, the delay, and the packet loss rate) which is determined by the protocol called as the BGP (Broader Gateway Protocol), and the traffic status of the route controlled through the tunnel (virtual link) on the plurality of overlay networks, are managed by a management table. Based on the management table of the traffic status of each route, it is determined that the route selected by the BGP of the underlay network is the optimum route or not. If it is not the optimum route, the optimum route is selected from the traffic status management table to its prefix.

### [Explanation about the CU Separation Network]

Note that, as a method for controlling a network system, the CU (C: control plane/U: user plane) separation network system is proposed, in which a node device (user plane) is controlled from an external control device (control plane).

As an example of the CU separation network system, there is the OpenFlow network system, which utilizes the OpenFlow technique by which the route control of a network system is performed by controlling switches from a controller. The details of the OpenFlow technique are described in the non-patent literatures 1 and 2. Note that, the OpenFlow network is merely one of various examples.

### [Explanation of OpenFlow Network System]

In the OpenFlow network system, a controller such as the OFC (OpenFlow Controller) or the like operates the flow table in a switch such as the OFS (OpenFlow Switch) or the like so that the behavior of the switch is controlled. The connection between the controller and the switch is formed by the Secure Channel for controlling the switch by using a control message compliant to the OpenFlow protocol

The switch in the OpenFlow network system indicates an edge switch and a core switch which form the OpenFlow network and they are under the control of a controller. The sequence of the stream of a packet from the receiving of the packet at the input side edge switch to the transmitting of the packet at the output side edge switch in the OpenFlow network is called as the Flow.

The packet may also be called as the frame. The difference between the packet and the frame is merely the difference of the unit of the data (PDU: Protocol Data Unit) treated by the protocol. The packet is the PDU in the TCP/IP (Transmission Control Protocol/Internet Protocol). On the other hand, the frame is the PDU in the Ethernet (Registered Trademark).

The flow table is a table in which the Flow entry, by which a predetermined action applied to a packet (communication data) being matched to a predetermined matching condition (rule) is defined, is registered.

The rule of the Flow entry is defined by various combinations of any or all of: the Destination Address; the Source Address; the Destination Port; the Source Port, which are included in the header region of each protocol hierarchy level of the packet, and discriminable. Note that, as the above-mentioned address, the MAC address (Media Access Control Address) and the IP address (Internet Protocol Address) are included. Further, in addition to the above, the information of the Ingress Port can be used as a rule of the Flow entry. Moreover, as a rule of the Flow entry, an expression which expresses a part (or the all) of the header region of a packet indicating the flow by the regular expression, the wild card "*" or the like can be set.

The action of the Flow entry indicates an action such as "output to a specific port", "discard", "rewrite the header" or the like. For example, when identification information of an output port (output port number or the like) is represented in an action in the Flow entry, the switch outputs the packet to the corresponding port. When the identification information of the output port is not represented, the switch discards the packet. Or, when header information is represented in an action in the Flow entry, the switch rewrites the header of the packet based on the represented header information.

A switch in the OpenFlow network system performs an action of a Flow entry to the packet group (packet series) being matched to the rule of the Flow entry.

In the OpenFlow network system, when a Flow entry matched to a received packet exists, the switch processes the received packed in accordance with the action described in the Flow entry. When the matched Flow entry does not exist, the switch reports the receiving of the packet to the OpenFlow protocol.

In the OpenFlow network system, in a case where a route control is realized by settling the operation of the virtual network by using the receiving of a packet from a physical node as a trigger, when the number of input packets is increased, the load of the controller becomes heavy, and as a result, a problem of instability of the network operation occurs.

Further, there are devices (intermediate devices), which are installed stealthily in the network for monitoring or checking the traffic (digital data which transfers through the network), such as a firewall or a security device. Here, such intermediate devices are called as the Middlebox. Since the Middle box is a sophisticated device and so that its cost is generally high, it is desired to increase the usage efficiency by utilizing it for more services in an environment such as a data center. By virtualizing the network, the network can be constructed independently of the physical connection relation. Then, in a virtual network, a method for solving the problem that the load of the controller becomes heavy is desired, with performing a policy route control which can make the usage of the Middle box flexible.

### Citation List

### Patent Literature

[PTL1] Japanese Patent Application Publication JP2007-213465A
[PTL2] Japanese Patent Application Publication JP2010-233126A

### Non-Patent Literature

[NPTL1] Nick McKeown and other seven persons, OpenFlow: Enabling Innovation in Camp us Networks", [online], [retrieved at October 22, 2010], <URL:http://www.openflowswitch.org//documents/openflow -wp-latest.pdf>
[NPTL2] OpenFlow Switch Specification, Version 1.0.0 <URL:http://www.openflowswitch.org/documents/openflow-spec-v1.0.0.pdf>

### Summary of the Invention

In a case of realizing a virtual network configuration adopting the switch of the OpenFlow network system, there is the possibility that the load of controller processing becomes heavy and the operation becomes instable when a large amount of new flows occurs or inquiries of new flows occur from a plurality of switches around a same time.

Further, in a means for reducing the load of the switch controller, it has been desired to realize a policy route control in a virtual network.

An object of the present invention is to provide a network system by which any policy route control defined in a virtual network configuration can be realized, without transferring a packet to the controller when a new flow occurs.

According to an aspect of the present invention, a network system includes: a switch; and a controller configured to set a flow entry in which a rule and an action for controlling a predetermined packet uniformly are defined as a flow to a flow table in the switch. The controller includes: a function unit for managing a configuration of a virtual network composed of virtual nodes; and a function unit for determining a transfer route of the predetermined packet based on the configuration of the virtual network, and setting a flow entry based on the transfer route to the flow table of the switch in advance.

According to an aspect of the invention, a controller includes: a function unit for managing a configuration of a virtual network composed of virtual nodes; a function unit for determining a transfer route of a predetermined packet based on the configuration of the virtual network; and a function unit for setting a flow entry, in which a rule and an action for controlling the predetermined packet uniformly are defined as a flow, to a flow table of the switch in advance based on the transfer route.

According to an aspect of the present invention, a policy route setting method is performed by a computer, and the method includes: managing a configuration of a virtual network composed of virtual nodes; determining a transfer route of a predetermined packet based on the configuration of the virtual network; and setting a flow entry, in which a rule and an action for controlling the predetermined packet uniformly are defined as a flow, to a flow table of the switch in advance based on the transfer route.

According to an aspect of the present invention, a program makes a computer perform the steps of: managing a configuration of a virtual network composed of virtual nodes; determining a transfer route of a predetermined packet based on the configuration of the virtual network; and setting a flow entry, in which a rule and an action for controlling the predetermined packet uniformly are defined as a flow, to a flow table of the switch in advance based on the transfer route.

In a virtual network being independent of the physical network configuration, it becomes possible to realize a flexible route control which goes through any Middle box under a stable network operation.

### Brief Description of the Drawings

Fig. 1 is a view for explaining an exemplary embodiment of the policy route setting of a network system according to a present invention;
Fig. 2 is a flowchart showing an operation of a policy route setting of a network system according to a present invention; and
Fig. 3 is a block diagram showing a configuration of a controller of a network system according to the present invention.

### Description of Exemplary Embodiments

### <Exemplary Embodiments>

Referring to the accompanying drawings, some exemplary embodiments of the present invention will be described below.

The present invention is intended to the CU separation type network system. In the following explanation, the OpenFlow network system, which is an example of the CU separation type network systems, is explained. However, actually, the present invention is not limited to the OpenFlow network system.

### [Two Types of Flow Entry Registration Means]

In the OpenFlow, the means for registering a Flow entry in a flow Table is grossly classified into the "Proactive type" and the "Reactive type."

In the "Proactive type", the controller calculates the route (path) of a predetermined packet group (flow) "in advance (before the data communication is started)", and registers the Flow entry in the flow table of the switch. Namely, the term "Proactive type" here indicates that the "Flow entry registration in advance" which is performed automatically by the controller.

In the "Reactive type", the controller calculates the route of the packet group (flow) "when the controller receives an inquiry about the 1st packet (a new packet whose Flow entry is not registered in the switch) from a switch," and registers the Flow entry into the flow table in the switch. Namely, the term "Reactive type" here indicates the "Flow entry registration in real time" which is performed by the controller in response to the inquiry from a switch

In the OpenFlow network, basically, the "Reactive type" is major, in which a Flow entry corresponding to a received packet is registered when the controller receives an inquiry about the 1st packet from a switch.

However, for solving the problem of performance by reducing the processing frequency of the flow table, the "Proactive type" is considered to be preferable. For example, when a large amount of 1st packets reaches a controller, the "Proactive type" is considered to be preferable for processing all of them. However, actually, in the hundred-percent "Proactive type", the number of Flow entries is considered to be enormous. Therefore, it is considered to partially adopt the "Reactive type" to avoid the restriction of the number of Flow entries.

Further, by adopting the "Proactive type", the flow can be defined before the communication is started. Therefore, the problem of an occurrence of a large amount of flows caused by the virus Nimda and the like, and the fraudulent access caused by unidentified packets, etc. are considered to be avoidable.

The present invention is a specific means for realizing the "Proactive type" in the OpenFlow network.

### [Entire Configuration]

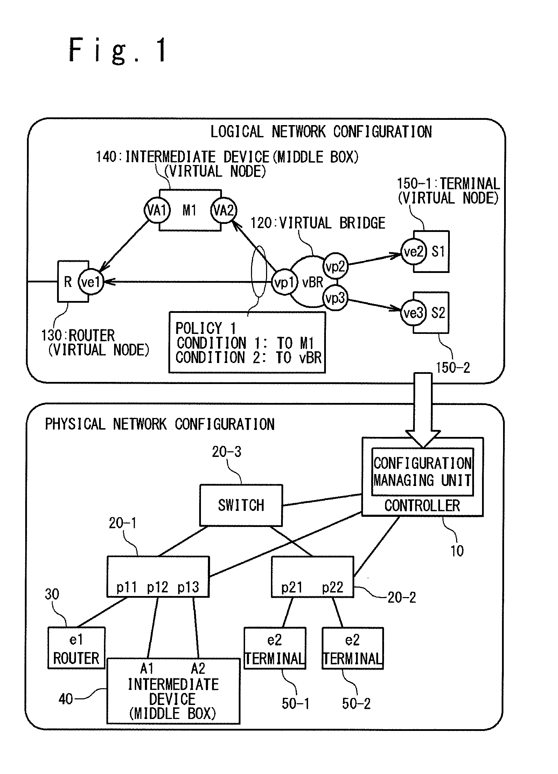

As represented in Fig. 1, a network system according to the present invention includes: a controller 10; switches 20 (20-i, i=1 to n: n is the number of switches); a router 30; an intermediate device (middle box) 40; and terminals 50 (50-j, j=1 to m: m is the number of terminals).

The controller 10 calculates a route based on the topology information which indicates the network connection status and the like, and registers the Flow entry in the flow table in the switches relating to the calculated route.

Each of the switches 20 (20-i, i=1 to n) transfers a received packet in accordance with the Flow entry registered in the own flow table. Switches 20 (20-i, i=1 to n) are connected via the network.

The router connects the internal (inside) network formed by the switches 20 (20-i, i=1 to n) and an external (outside) network.

The intermediate device 40 generally indicates the devices intermittently inserted in the network, such as a firewall, a load balancer (load distribution device), a band control device, a security monitoring device, and the like.

The terminal 50 (50-j, j=1 to m) is an input/output device manipulated by a user, which generates packets and transmits the packets to the switch which is an input side edge switch (Ingress) among the switches 20 (20-i, i=1 to n).

The controller 10 and the switch 20 (20-i, i=1 to n) are connected via a Secure Channel. Further, each of the router 30, the intermediate device 40, and the terminals 50 (50-j, j=1 to m) is connected to a switch 20 (20-i, i=1 to n).

### [Examples of Hardware]

Some specific examples of hardware for realizing a network system according to the present invention are explained below.

As examples of the controller 10 and the terminals 50 (50-j, j=1 to m), a computer such as a PC (personal computer), an appliance, a thin-client server, a workstation, a mainframe, a supercomputer or the like is assumed. Further, the controller 10 and the terminals 50 (50-j, j=1 to m) may be an expansion board mounted on a computer or a Virtual Machine (VM) constructed on a physical machine. Moreover, as examples of the controller 10 and the terminals 50 (50-j, j=1 to m), a mobile phone, a smartphone, a smartbook, a car navigation system, a portable game console, a non-portable game console, a mobile audio player, a handy terminal, a gadget (electronic device), an interactive television, a digital tuner, a digital recorder, an information appliance, an OA (Office Automation) device, a point-of sales terminal and a multifunction copy machine, a Digital Signage or the like is considered. Note that, the controller 10 and the terminal 50 (50-j, j=1 to m) may be mounted on a movable body such as an automobile, a vessel, an aircraft or the like.

As examples of the switch 20 (20-i, i=1 to n), the router 30, and the intermediate device 40, a network switch, a router, a proxy, a gateway, a firewall, a load balancer, a band control device (packet shaper), a security monitoring controlling device (SCADA: Supervisory Control And Data Acquisition), a gatekeeper, a base station, an Access Point (AP), a Communication Satellite (CS), or a computer having a plurality of communication ports is considered. Further, the switch 20 (20-i, i=1 to n) may be a virtual switch realized by a virtual machine (VM) constructed on a physical machine.

The controller 10, the switch 20 (20-i, i=1 to n), the router 30, the intermediate device 40, and the terminals 50 (50-j, j=1 to m) are realized by: a processor driven based on a program and performs a predetermined processing; a memory which stores such a program or various data; a communication interface (I/F) for connecting to a network.

As examples of the above processor, a CPU (Central Processing Unit), a Network Processor (NP), a microprocessor, a microcontroller, and an LSI (Large Scale Integration) having dedicated functions are considered.

As examples of the above memory, a semiconductor storage device such as a RAM (Random Access Memory), a ROM (Read Only Memory), an EEPROM (Electrically Erasable and Programmable Read Only Memory), a flash memory or the like, an auxiliary storage device such as an HDD (Hard Disk Drive) or an SSD (Solid State Drive), a removable disk such as a DVD (Digital Versatile Disk) or the like, or a storage media such as an SD memory card (Secure Digital memory card) and the like are considered.

Note that, the above processor and the above memory may be combined to form a one body. For example, in recent years, forming a device on one chip has been developed in a device such as a microcomputer. Then, an example of a one-chip microcomputer mounted on a computer and the like and having the processor and the memory is considered.

As examples of the above communication interface, a semiconductor integrated circuit accommodating a network communication such as a board (mother board, I/O board), a chip or the like, a network adapter such as an NIC (Network Interface Card) or a similar expansion card, a communication device such as an antenna, a communication port such as a connector and the like are considered.

Further, as examples of the network, the Internet, a LAN (Local Area Network), a Wireless LAN, a WAN (Wide Area Network), a Backbone, a cable television (CATV) communication line, a land-line phone network, a mobile phone network, the WiMAX (IEEE 802.16a), 3G (3rd Generation), a dedicated line (lease line), an IrDA (Infrared Data Association), Bluetooth (registered trademark), a serial communication line, a data bus and the like are considered.

However, they are not limited to the above examples.

### [Physical Network]

The physical network (real network) shown in Fig. 1 will be explained.

Here, an example where the number of the switches is "3" and the number of the terminals is "2" is explained. However, actually, it is not limited to such an example.

The interface "e1" of the router 30 and the interface "p11" of the switch 20-1 are connected to each other.

The interface "A1" of the intermediate device 40 and the interface "p12" of the switch 20-1 are connected to each other.

The interface "A2" of the intermediate device 40 and the interface "p13" of the switch 20-2 are connected to each other.

The interface "e2" of the terminal 50-1 and the interface "p21" of the switch 20-2 are connected to each other.

The interface "e3" of the terminal 50-2 and the interface "p22" of the switch 20-2 are connected to each other.

Further, the controller 10 manages the configuration of the logical network (virtual configuration) explained below by its internal configuration managing unit. Note that, this configuration managing unit is realized by the above processor and the above memory.

### [Logical Network]

The logical network (virtual network) shown in Fig. 1 will be explained.

In the logical network shown in Fig. 1, each of the router, the intermediate device, and the terminals is defined as a virtual node, and they are connected to a virtual bridge to form a logical virtual network.

Here, the logical network includes: a virtual bridge "vBR" 120, a router "R" 130, an intermediate device "M1" 140, a terminal "S1" 150-1, and a terminal "S2" 150-2.

The interfaces of the logical network (virtual interfaces) and the interfaces of the physical network (physical interfaces) are linked to each other by a configuration setting at the time of designing the logical network.

The correspondence relation between the virtual network and the physical network will be explained.

The virtual interface "ve1" of the router "R" 130 is linked to the interface "p11" of the switch 20-1.

The virtual interface "ve2" of the terminal "S1" 150-1 is linked to the interface "p21" of the switch 20-2.

The virtual interface "ve3" of the terminal "S2" 150-2 is linked to the interface "p22" of the switch 20-2.

The virtual interface "VA1" of the intermediate device "M1" is linked to the interface "p12" of the switch 20-1.

The virtual interface "VA2" of the intermediate device "M1" 140 is linked to the interface "p13" of the switch 20-1.

Here, the virtual interface "vp1" of the virtual bridge "vBR" is connected to the virtual interface "VA2" of the intermediate device "M1" and the virtual interface "ve1" of the router "R" 130.

Here, in the virtual interface "vp1" of the virtual bridge "vBR" 120, "policy 1" is defined as a redirect policy (redirect type policy). In "policy 1", the "condition 1" and "condition 2" are set.

The "condition 1" is a rule representing that a transmitting packet (output packet) is transmitted to the intermediate device "M1" 140.

The "condition 2" is a rule representing that a transmitting packet is transmitted to the virtual router "R" 130.

Namely, when a transmitting packet is matched with the "condition 1", the virtual bridge "vBR" 120 transmits the transmitting packet to the virtual interface "VA2" of the intermediate device "M1".

Further, when a transmitting packet is matched with the "condition 2", the virtual bridge "vBR" transmits the transmitting packet to the virtual interface "ve1" of the router "R" 130.

The virtual interface "VA1" of the intermediate device "M1" 140 is connected to the virtual interface "ve1" of the router "R" 130.

The virtual interface "vp2" of the virtual bridge "vBR" 120 and the virtual interface "ve2" of the terminal "S1" 150-1 are connected to each other.

The virtual interface "vp3" of the virtual bridge "vBR" 120 and the virtual interface "ve3" of the terminal "S2" 150-2 are connected to each other.

In the network shown in Fig. 1, the redirect policy of the virtual configuration is reflected to the physical network for reflecting to the connection setting of the physical network with maintaining the connection relation or the flow of data defined by the logical network.

### [Redirect Policy of Virtual Configuration]

The operation of the logical network (expected operation) shown in Fig. 1 will be explained.

The traffic transmitted from the terminal "S1" 150-1 or the terminal "S2" 150-2 to the outside of the router "R" 130 is, after transmitted to the virtual bridge "vBR" 120, outputted from the virtual interface "vp1".

At this time, the "policy 1" is applied to the virtual interface "vp1", and when the traffic is matched with the "condition 1" under the condition of the "policy 1", it is transferred from the virtual interface "vp1" to the intermediate device "M1" 140.

Then, after the functions such as a traffic monitoring, control, security and the like of the intermediate device "M1" 140 are applied, it is outputted to the router "R" 130.

On the other hand, when it is matched to the "condition 2", it is not transmitted to the intermediate device "M1" 140 and directly transmitted to the router "R" 130.

For realizing in the transfer setting of switches to follow the operation of the logical network, the physical development is required for the route setting of terminal "A" → terminal "B" supposing that there are the terminal "A" and the terminal "B".

The terminal "A" and the terminal "B" indicate a physical device in the OpenFlow network system other than the switch, which is connected to a port of a switch of the OpenFlow network system, such as a computer like a server, client PC and the like, an intermediate device like a security device, load balancer and the like, and a relay device like a router, a layer 3 switch, or a layer 2 switch.

In the logical network shown in Fig. 1, the router "R" 130, the terminal "S1" 150-1, and the terminal "S2" 150-2 correspond to the terminal "A" or the terminal "B". Therefore, "R" →"S1", "R"→"S2", "S1"→"S2" , "S1"→"R", "S2"→"S1", "S2"→"R" correspond to the communication between any terminals "A" and "B" (the terminal "A" → the terminal "B").

For example, in the logical network shown in Fig. 1, when a packet such as an ARP (Address Resolution Protocol) is received from the router "R" 130, the MAC address of the router "R" 130 can be recognized. Also, when a packet such as an ARP is received from the terminal "S1" 150-1, the MAC address of the terminal "S1" 150-1 can be recognized.

At this time, if it is possible to perform a transfer setting of a switch between the router "R" 130 and the terminal "S1" 150-1 by the "Proactive type" in advance (preliminary), the passive operation of the "Reactive type", in which the controller 10 settles the route at the time when the first packet of a flow is brought up to the controller 10 (in response to an inquiry regarding the first packet), can be reduced. As a result, it is possible to perform a switch setting actively before the input of the data transfer traffic.

### [Policy Route Setting]

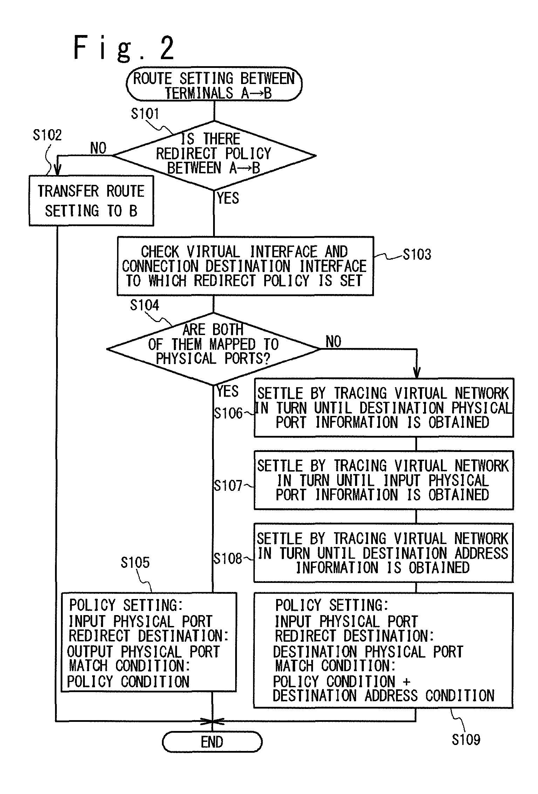

For the above-mentioned purposes, referring to Fig. 2, an operation of a route setting of a communication between the terminal "A" and the terminal "B" (terminal "A" → terminal "B") will be explained.

### (1) Step S101

At first, the controller determines whether a redirect policy exists or not for the communication between the terminal "A" and the terminal "B" (terminal "A" → terminal "B") in the virtual network.

### (2) Step S102

At this time, when a redirect policy does not exist for the communication between the terminal "A" and the terminal "B" (terminal "A" → terminal "B"), the controller 10 sets a transfer flow in advance by setting the Flow entry being matched with (coincides with) the destination of the terminal "B" from the terminal "A" to the terminal "B".

### (3) Step S103

Further, when a redirect policy exists for the communication between the terminal "A" and the terminal "B" (terminal "A" → terminal "B"), the controller 10 checks (confirms) the virtual interface to which the redirect policy is set and the virtual interface which is the redirect destination.

### (4) Step S104

The controller 10 determines whether or not those virtual interfaces are mapped to the physical ports of the terminals, routers, intermediate devices and the like. Namely, the controller judges whether or not the policy on the virtual network is a rule corresponding to the ports of the actual physical network.

### (5) Step S105

When both of those virtual interfaces are mapped to physical ports (when the policy on the virtual network is a rule corresponding to the ports of the actual physical switches), the controller performs the following operations: the controller sets the setting position of the Flow entry (the interface to which the policy setting is performed) to the switch port which is mapped to the input side interface (the input physical port) among those two physical port; and the controller sets the redirect destination to the switch port mapped to the output side interface (the destination physical port) and sets the matching condition of the Flow entry to the matching condition of the policy (the policy condition). Namely, the controller 10 sets the interface to which the policy setting is applied as the "input physical port", the interface being the redirect destination as the "destination physical port", and the matching condition as the "policy condition". At this time, the controller 10 can set the Flow entry corresponding to the redirect policy to the switch, regardless of the addresses of the terminal "A" and the terminal "B".

### (6) Step S106

Further, the controller settles the physical information such that the flow setting can be performed, when any or both of the virtual interfaces are mapped only to virtual ports (in a case where the policy on the virtual network is not a rule corresponding to the ports of the physical switches). At first, when the destination is mapped to a virtual port, the controller recognizes the destination physical port by tracing from the virtual node to the terminal "B". For example, in the case where the virtual node is the virtual bridge "vBR" 120 and the terminal "B" is connected to the destination side thereof, the port to which the terminal "B" is connected is treated as the "destination physical port". At this time, since the controller 10 requires the network address information of the terminal "A" and the terminal "B" when tracing the virtual network, at the time of performing the station detection (detection of terminals), the controller 10 learns the MAC addresses when the terminal "A" or the terminal "B" transmits a packet such as an ARP, and sets the Flow entry corresponding to the redirect policy to the switch by using the MAC addresses.

### (7) Step S107

Next, when the input port of the redirect source is a virtual port, the controller traces the virtual network until an input physical port is recognized. For example, in the case where the terminal "A" is connected to the terminal "B" via the intermediate device "M1" 140 and the virtual bridge "vBR" 120, the controller 10 traces from the virtual bridge "vBR" 120 to the terminal "A", and when the physical port of the intermediate device "M1" 140 is recognized, sets the physical port as the "input physical port".

### (8) Step S108

Further, when the redirect destination is the intermediate device "M1" 140 which does not have the MAC address, the address of the terminal "B" connected to the destination side of the intermediate device "M1" 140 becomes the destination address. Therefore, the controller 10 obtains the "final destination MAC address" by tracing the virtual network.

### (9) Step S109

The controller 10 sets the setting position of the Flow entry to the physical port of the intermediate device "M1" 140, sets the redirect destination to the port to which the terminal "B" is connected, and sets the matching condition of the Flow entry to the matching condition of the policy and the destination address condition. Namely, the controller 10 sets the interface to which the policy setting is performed as the "input physical port", sets the interface of the redirect destination side as the "destination physical port", and sets the matching condition as the "policy condition + destination address condition".

As explained above, the controller 10 can set the redirect processing defined in the virtual network to each of the Flow entries of the corresponding switches 20 (20-i, i=1 to n) by obtaining the port position, the redirect destination, and the destination address used as the matching condition of the Flow entry of the switch to which the policy is set.

By the above operation, a policy defined in a virtual network such as redirecting to an intermediate device can be set in advance, triggered by the detection of a terminal (ARP and the like), the registration of a terminal from a management system or the like, not triggered by the receiving of a packet at a flow switch.

### [Example of Setting of Flow entry]

Next, the setting of a Flow entry in the configuration example shown in Fig. 1 will be specifically explained.

Here, a case where the flow setting from the terminal "S1" 150-1 to the destination router "R" 130 in Fig. 1 is performed is considered.

On this route, the "policy 1" is applied, and the transmission to the router "R" 130 is performed by going through the intermediate device "M1" 140 under the "condition 1", and not going through the intermediate device "M1" 140 under the "condition 2". The condition 1 and the condition 2 can be defined by discriminating them based on the packet header field. For example, the condition 1 is a case where the destination port number of TCP (Transmission Control Protocol) is 80 (HTTP) in the TCP communication, and the condition 2 is a case other than the condition 1.

The interface to which the "policy 1" is applied is the virtual interface "vp1" of the virtual bridge "bBR" 120, and the redirect destination interfaces are the virtual interface "VA2" of the intermediate device "M1" 140 and the output port "ve1" of the router "R" 130.

All of the above cases are a transfer from a virtual port to a physical port.

### [Case of Going through Intermediate Device "M1"]

At first, the controller 10 obtains about the policy going through the intermediate device "M1".

In the step S106 shown in Fig. 2, the physical port is obtained as the destination port. Since the physical port corresponding to the virtual interface "VA2" of the intermediate device "M1" 140 is the interface "A2" of the intermediate device 40, the redirect destination interface is the interface "p13" of the switch 20-1 connected to the interface "A2" of the intermediate device 40.

Further, the port to which the policy is set is the virtual interface "ve2" of the terminal "S1" 150-1 which is recognized by tracing to the terminal "S1" 150-1 via the virtual bridge "vBR" 120. Since the physical port corresponding to the virtual interface "ve2" of the terminal "S1" 150-1 is the interface "e2" of the terminal 50-1, the interface to which the policy setting is performed is the interface "p21" of the switch 20-2 connected to the interface "e2" of the terminal 50-1.

Further, since the physical port corresponding to the output port "ve1" of the router "R" 130 is the interface "e1" of the router 30, the destination of this route is the address of the router 30 (described as "Mr").

Then, in the interface "p21" of the switch 20-2, it is appropriate to set the Flow entry whose matching condition is the "condition 1", whose destination is "Mr", and whose redirect destination is the interface "p13".

Note that, actually, many stages of switches are constructed from the interface "p21" of the switch 20-2 to the interface "p13" of the switch 20-1, so that the flow setting of each switch has flexibility.

Namely, when the destination is "Mr", the following setting of the Flow entry may be adopted. Transferring to the switch 20-1 via the switch 20-3 is set. At the input port of the switch 20-1 from the switch 20-3, the transferring to the interface "p13" port is set under the condition of the policy 1 being the "condition 1" and the destination being "Mr".

Further, with respect to the route from the intermediate device to the router, since both ends of the link is mapped to the physical port, the Flow entry from the input interface "p12" to the output interface "p11" is set.

### [Case of not Going through Intermediate Device "M1"]

Next, the setting in the case where the transferring from the virtual interface "vp1" of the virtual bridge "vBR" 120 to the output port "ve1" of the router "R" 130 is set under the "condition 2" will be explained.

Since the physical port corresponding to the output port "ve1" of the router "R" 130 is the interface "e1" of the router 30, the redirect destination interface is the interface "p11" of the switch 20-1 connected to the interface "e1" of the router 30.

Since the virtual interface corresponding to the interface "p11" of the switch 20-1 is the virtual interface "vp1" of the virtual bridge "vBR" 120, the input side physical port reached by tracing the logical network from the virtual interface "vp1" of the virtual bridge "vBR" 120 is the interface "p21" connected to the terminal "S1" 150-1.

Further, the physical port corresponding to the output port "ve1" of the router "R" 130 is the interface "e1" of the router 30, the destination of this route is "Mr" being the address of the router 30.

Then, in the interface "p21" of the switch 20-2, it is appropriate to set the Flow entry whose policy 1 is the "condition 2", whose destination is "Mr", and whose redirect destination is the interface "p11".

Also in this case, as explained before, there is flexibility in the setting of the Flow entry for each of the switch 20-2, the switch 20-3, and the switch 20-1.

### [Configuration of Controller]

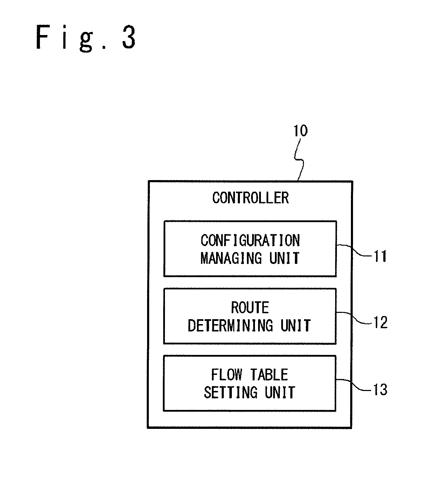

With reference to Fig. 3, a configuration example of the controller 10 will be explained.

The controller 10 includes a configuration management unit 11, a route setting unit 12, and the flow table setting unit 13.

The configuration management unit 11 manages the configuration and the redirect policy of the virtual network composed of virtual nodes. The route setting unit 12 determines the transfer route of a predetermined packet based on the configuration and the redirect policy of the virtual network. The flow table setting unit 13 sets the flow entry, in which a rule and an action for uniformly control a predetermined packet as a flow are defined, to the flow tables of the switches on the transfer route based on the transfer route in advance, and reflects the redirect policy of the virtual network to the physical network.

Note that, the route determination unit 12 judges whether the redirect policy is a rule corresponding to the physical interface of the switch or not. At this time, if the redirect policy is a rule corresponding to the port of the switch, the flow table setting unit 13 sets the flow entry corresponding to the redirect policy to the flow table in the switch on the transfer route. On the contrary, if the redirect policy is not a rule corresponding to the port of the switch, the route determination unit 12 settles the rule corresponding to the port of the switch by using the information of the terminal obtained at the time of detecting the terminal. The flow table setting unit 13 sets the Flow entry corresponding to the redirect policy to the flow table in the switch on the transfer route.

Further, the route determination unit 12 specifies the physical interface linked to the transfer destination of the virtual interface of the virtual node based on: the redirect policy among the virtual interfaces of the virtual nodes; and the information of the virtual interface linked to the physical interface of the switch. The flow table setting unit 13 sets the Flow entry corresponding to the redirect policy to the flow table in the switch on the transfer route.

### [Features of the Present Invention]

As explained above, in the present invention, in the configuration information of a virtual network, regarding the policy route control which redirects between: the virtual interface linked to a physical switch; and a virtual interface defined only on a virtual node, the physical interface linked to the transfer destination of a virtual network is specified. Then, the switch operation is set as the policy filter in the physical switch. As a result, any policy route control defined in the virtual network configuration is realized without transferring a packet to the controller when a new flow occurs.

Further, in the present invention, in the processing of the redirect transfer based on a policy in a virtual network, it is judged whether the policy on the virtual network is a rule corresponds to a port of the actual physical switch or not. Then, if it is a rule corresponding to a port of the physical switch, the transfer rule corresponding to the policy is statically settled without using the terminal information, and the Flow entry corresponding to the policy is set to the flow table. If it is a rule which does not correspond to the port of the physical switch, triggered by the detection of the terminal, the transfer rule is dynamically settled by using the terminal information, and the Flow entry corresponding to the policy is set to the flow table.

### [Explanation of Effects]

According to the present invention, in a virtual network which does not depend on a physical network configuration, flexible control of a route which goes through any middle box (an intermediate device such as a firewall, a security function and the like) freely can be realized under a stable network operation.

Therefore, a middle box whose cost is high is flexibly utilized under a virtualized environment, so that the utilization ratio can be improved under a multi tenant environment.

### [Remarks]

In the above, some exemplary embodiments are described in detail. However, the present invention is not limited to the above exemplary embodiments, and even if some modification is applied to them within the scope of the present invention, it is included in the present invention.

The present application claims a priority based on Japanese Patent Application No. 2011-060408, and the disclosure of which is hereby incorporated into the present application by this reference.

## Claims

1. A network system comprising:
a switch; and
a controller configured to set a flow entry in which a rule and an action for controlling a predetermined packet uniformly are defined as a flow to a flow table in the switch,
wherein the controller comprises:
a means configured to manage a configuration of a virtual network composed of virtual nodes; and
a means configured to determine a transfer route of the predetermined packet based on the configuration of the virtual network and a redirect policy of the virtual network, set a flow entry based on the transfer route to the flow table of the switch in advance, and reflect the redirect policy of the virtual network to a physical network.

2. The network system according to claim 1, wherein the controller comprises:
a means configured to determine whether the redirect policy is a rule which corresponds to a physical interface of the switch or not;
a means configured to set a flow entry which corresponds to the redirect policy to the flow table of the switch when the redirect policy is a rule corresponding to a port of the switch; and
a means configured to settle a rule corresponding to the port of the switch by using information of a terminal obtained when the terminal is detected, and to set the flow entry which corresponds to the redirect policy to the flow table of the switch when the redirect policy does not correspond to the port of the switch.

3. The network system according to claim 2, wherein the controller further comprises:
a means configured to specify a physical interface which is linked to a transfer destination of a virtual interface of the virtual nodes based on a redirect policy among virtual interfaces of the virtual nodes and information of a virtual interface which is linked to a physical interface of the switch; and
a means configured to set a flow entry in which an action at a physical switch of the switch is defined to the flow table of the switch as a policy filter in the switch.

4. A controller comprising:
a means configured to manage a configuration of a virtual network composed of virtual nodes and a redirect policy of the virtual network;
a means configured to determine a transfer route of a predetermined packet based on the configuration of the virtual network and the redirect policy of the virtual network; and
a means configured to set a flow entry, in which a rule and an action for controlling the predetermined packet uniformly are defined as a flow, to a flow table of the switch in advance based on the transfer route, and reflect the redirect policy of the virtual network to a physical network.

5. The controller according to claim 4, further comprising:
a means configured to determine whether the redirect policy is a rule which corresponds to a physical interface of the switch or not;
a means configured to set a flow entry which corresponds to the redirect policy to the flow table of the switch when the redirect policy is a rule corresponding to a port of the switch; and
a means configured to settle a rule corresponding to the port of the switch by using information of a terminal obtained when the terminal is detected, and to set the flow entry which corresponds to the redirect policy to the flow table of the switch when the redirect policy does not correspond to the port of the switch.

6. The controller according to claim 5, further comprising:
a means configured to specify a physical interface which is linked to a transfer destination of a virtual interface of the virtual nodes based on a redirect policy among virtual interfaces of the virtual nodes and information of a virtual interface which is linked to a physical interface of the switch; and
a means configured to set a flow entry in which an action at a physical switch of the switch is defined to the flow table of the switch as a policy filter in the switch.

7. A policy route setting method performed by a computer comprising:
managing a configuration of a virtual network composed of virtual nodes and a redirect policy of the virtual network;
determining a transfer route of a predetermined packet based on the configuration of the virtual network and the redirect policy; and
setting a flow entry, in which a rule and an action for controlling the predetermined packet uniformly are defined as a flow, to a flow table of the switch in advance based on the transfer route, and reflecting the redirect policy of the virtual network to a physical network.

8. A storing medium which stores a program for making a computer perform the steps of:
managing a configuration of a virtual network composed of virtual nodes and a redirect policy of the virtual network;
determining a transfer route of a predetermined packet based on the configuration of the virtual network and a redirect policy of the virtual network; and
setting a flow entry, in which a rule and an action for controlling the predetermined packet uniformly are defined as a flow, to a flow table of the switch in advance based on the transfer route, and reflecting the redirect policy of the virtual network to a physical network.

9. The storing medium according to claim 8, wherein the program makes the computer further perform the steps of:
determining whether the redirect policy is a rule which corresponds to a physical interface of the switch or not;
setting a flow entry which corresponds to the redirect policy to the flow table of the switch when the redirect policy is a rule corresponding to a port of the switch; and
settling a rule corresponding to the port of the switch by using information of a terminal obtained when the terminal is detected, and setting the flow entry which corresponds to the redirect policy to the flow table of the switch when the redirect policy does not correspond to the port of the switch.

10. The storing medium according to claim 9, wherein the program makes the computer further perform the steps of:
specifying a physical interface which is linked to a transfer destination of a virtual interface of the virtual nodes based on a redirect policy among virtual interfaces of the virtual nodes and information of a virtual interface which is linked to a physical interface of the switch; and
setting a flow entry in which an action at a physical switch of the switch is defined to the flow table of the switch as a policy filter in the switch.
